# DEMANDE DE BREVET EUROPEEN

(11) **EP 1 470 889 A1**
(43) Date de publication de la demande: **27.10.2004**
(21) Numéro de dépôt: 04290910.1
(22) Date de dépôt: 06.04.2004
(51) Int. Cl.: B23P 15/10

(54) **Procédé de fabrication d'un piston, outillage pour la mise en oeuvre de ce procédé et piston ainsi obtenu.**

(30) Priorité: 23.04.2003 FR 0304985
(71) Demandeur: S.E.M.T. Pielstick, 93420 Villepinte (FR)
(72) Inventeur: Bousseau, Pierre, 92170 Vanves (FR)
(74) Mandataire: Barbin le Bourhis, Joel

(57) **Abrégé**

Obtention d'une ébauche de piston par forgeage à partir d'une masse métallique.

La masse métallique (18) est forgée dans une enclume creuse (13) à l'aide d'un poinçon (12) de façon à repousser ladite masse métallique dans une zone annulaire de celle-ci, tout en formant un bossage faisant saillie au centre d'un socle, le poinçon comportant une cavité (24) ouverte, propre à donner naissance audit bossage.

Le bossage est ensuite usiné pour comporter un alésage apte à recevoir un axe de bielle.

## Description

L'invention se rapporte principalement à un procédé de fabrication d'un piston ou d'au moins une partie de celui-ci comportant la jupe et les moyens de raccordement de la bielle aménagés à l'intérieur de cette jupe. L'invention concerne également un outillage pour la mise en oeuvre du procédé et tout piston ainsi obtenu. L'invention s'applique notamment à la fabrication des pistons de grandes dimensions pour des moteurs à combustion interne de forte puissance.

Pour la fabrication d'un piston de moteur, il est courant d'utiliser l'aluminium pour constituer au moins la jupe du piston abritant le pied de bielle et l'articulation de celle-ci. Au cours des dernières années, l'aluminium a été progressivement remplacé par un métal ou alliage plus résistant, notamment l'acier.

Souvent, le piston est en deux parties ; la tête de piston formant la paroi mobile de la chambre de combustion est fixée par des tirants à une autre pièce constituant la jupe du piston, creusée d'une large cavité abritant un axe transversal monté en chape et le pied de bielle articulée à cet axe. On peut obtenir cette pièce par forgeage à partir d'une masse de métal, par exemple de l'acier, de façon à constituer une ébauche de forme et dimensions aussi proche que possible de celles de la pièces souhaitée. Cette dernière est obtenue après un certain nombre de reprises en usinage.

On se heurte à des difficultés liées à l'importance et à la complexité de la cavité à pratiquer. Il est très difficile avec une configuration classique de jupe de piston où le pied de bielle s'articule au centre de la cavité, de faire fluer suffisamment le métal pour ménager une telle cavité.

Pour un piston de grande taille, le problème est encore plus important. Par exemple, une jupe forgée de grande taille conduit à l'élaboration d'une ébauche, après forgeage, qui nécessite des reprises en usinage telles que son poids final est diminué environ de moitié.

On conçoit donc qu'un tel procédé nécessite des opérations d'usinage nombreuses et compliquées et est par conséquent très coûteux à exploiter.

L'idée de base de l'invention consiste à modifier la forme de la jupe classiquement utilisée pour rendre le forgeage plus facile et plus proche de la géométrie finale afin de réduire les reprises en usinage.

On connaît un piston comportant un pilier central dans lequel on a pratiqué un alésage destiné à recevoir un axe ou tourillon d'articulation d'une bielle, l'extrémité de cette bielle comportant deux branches formant une fourche. Par exemple, le brevet français 2 135 429 décrit une structure de ce genre mais il s'agit d'un piston de petite taille, de l'ordre de 60 mm de diamètre réalisé en aluminium et entièrement par usinage.

En adoptant cette forme particulière de piston, on a mis en lumière que le forgeage devient beaucoup plus facile, parce qu'il n'est plus nécessaire de creuser une cavité importante au centre de la pièce, les parties évidées étant au contraire ramenées en périphérie, ce qui facilite le fluage du métal pendant le forgeage. L'ébauche que l'on peut obtenir est ainsi plus proche de la configuration finale de la pièce, ce qui réduit d'autant les reprises en usinage.

Plus précisément, l'invention concerne un procédé de fabrication d'un piston, caractérisé en ce qu'il comporte une étape de forgeage d'une ébauche d'au moins une partie dudit piston, propre à repousser une masse métallique dans une zone annulaire de celle-ci tout en formant un bossage faisant saillie au centre d'un socle à contour circulaire, ledit bossage étant conformé et dimensionné pour être percé d'un alésage destiné à recevoir un axe d'articulation d'une bielle. Celle-ci comporte deux branches formant une fourche.

Avantageusement, le bossage de l'ébauche peut être conformé avec deux faces sensiblement planes et faisant un angle entre elles, en sorte que ledit bossage s'élargisse vers ledit socle. Cette forme est en soi favorable au forgeage car elle permet de dégager facilement le poinçon. Elle permet aussi de donner une configuration avantageuse à l'alésage qui sera ultérieurement pratiqué au travers dudit bossage. Dans ces conditions en effet, la surface cylindrique de la partie de l'alésage contenue entre un plan longitudinal médian de celui-ci perpendiculaire à l'axe du piston et la tête dudit piston, sera plus grande que la surface de l'autre partie d'alésage, ce qui constitue une caractéristique avantageuse pour s'accommoder des différents modes de sollicitation transmis à l'axe d'articulation de la bielle, montée dans cet alésage.

Selon une autre caractéristique, le forgeage provoque aussi la formation de deux portions de jupe en vis-à-vis, à surface extérieure sensiblement cylindrique, s'étendant symétriquement en regard de part et d'autre d'une direction d'axe d'articulation (c'est-à-dire l'axe d'articulation de la bielle). Entre ces deux portions de jupe, on ménage deux larges échancrures s'étendant globalement transversalement à cette direction d'axe d'articulation.

Il apparaît que les évidements pratiqués tout autour du bossage central facilitent la remontée du métal dans la matrice, propre à créer les deux portions de jupe et le bossage lui-même. Le procédé peut mettre en oeuvre une presse si celle-ci est suffisamment puissante. Dans ce cas, l'ébauche sera obtenue en deux courses. On peut aussi procéder plus classiquement par martelage. Dans les deux cas, l'outillage est le même.

L'invention concerne donc aussi un outillage de forgeage d'une ébauche d'au moins une partie de piston, caractérisé en ce qu'il comporte une enclume creuse à paroi latérale interne sensiblement cylindrique et un poinçon comportant une cavité ouverte débouchant sur sa face d'extrémité, ladite cavité ayant une forme et des dimensions propres à définir un bossage faisant saillie au centre d'un socle à contour circulaire formé au fond de ladite enclume creuse, ledit bossage étant destiné à être repris en usinage pour comporter un alésage apte à recevoir un axe d'articulation d'une bielle telle que définie ci-dessus.

L'invention vise aussi tout piston caractérisé en ce qu'il comporte au moins une partie formant jupe de coulissement, obtenu par la mise en oeuvre du procédé défini ci-dessus et comportant un pilier central résultant de l'usinage d'un bossage venu de forgeage, ledit pilier comportant un alésage destiné à recevoir un axe d'articulation d'une bielle.

Bien entendu, l'invention s'applique aussi à la fabrication d'un piston en une seule pièce, s'il n'est pas prévu de réaliser séparément la tête de piston et la jupe.

L'invention sera mieux comprise et d'autres avantages de celle-ci apparaîtront mieux à la lumière de la description qui va suivre, donnée uniquement à titre d'exemple et faite en référence aux dessins annexés dans lesquels :
- la figure 1 est une vue en perspective de l'outillage de forgeage d'une partie d'un piston de moteur à combustion interne, la matrice étant représentée partiellement en coupe ;
- la figure 2 est une vue en perspective de l'ébauche obtenue, dans le sens du forgeage ;
- la figure 3 est une vue en perspective de la pièce, dans le même sens, après reprise en usinage de l'ébauche de la figure 2 ;
- la figure 4 est une coupe IV-IV de la figure 3, dans l'autre sens ;
- la figure 5 est une coupe V-V de la figure 3, dans l'autre sens ;
- la figure 6 est une vue en coupe du piston complet, représenté selon la même coupe que la figure 5 après assemblage de la bielle ; et
- la figure 7 illustre une variante où la bielle est guidée latéralement par le piston.

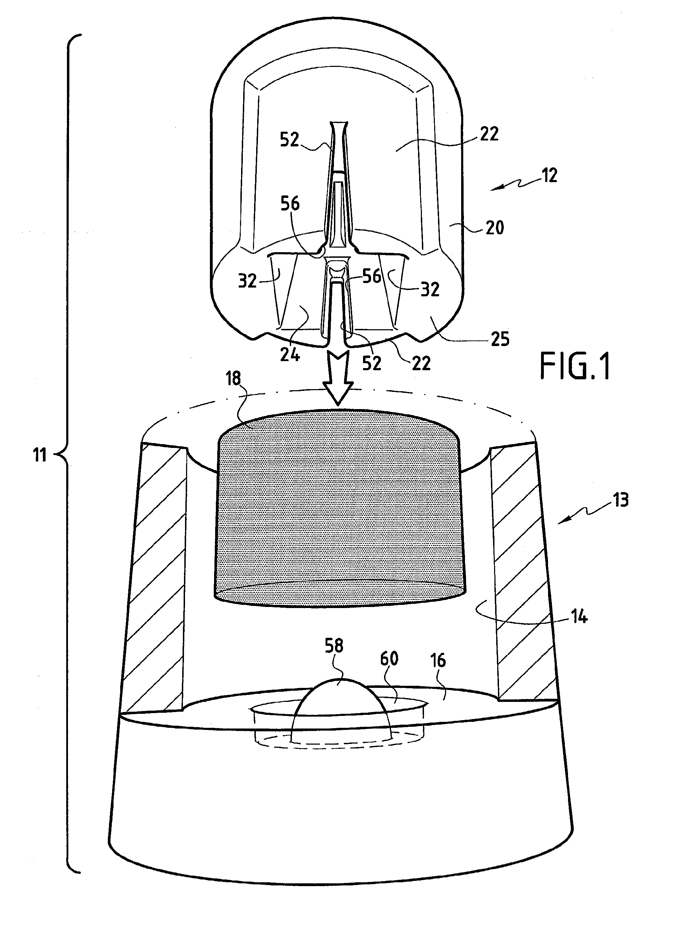

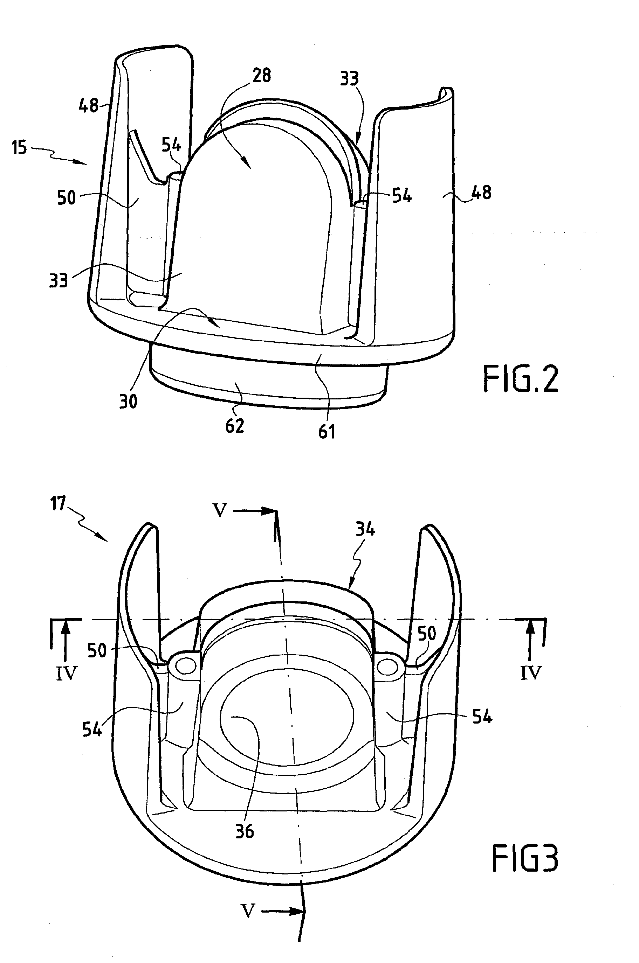

La figure 1 montre un outillage de forgeage 11 d'une ébauche d'au moins une partie de piston, à savoir la partie comprenant la jupe de coulissement et les moyens d'articulation de la bielle. L'ébauche 15 obtenue à la fin du forgeage est représentée à la figure 2. La pièce correspondante 17, après quelques reprises en usinage est représentée notamment à la figure 3.

L'outillage comporte un poinçon 12 et une enclume creuse 13 comprenant une paroi latérale interne 14 sensiblement cylindrique et un fond 16 à contour circulaire. L'ébauche sera conformée à l'intérieur de cette enclume creuse, en y introduisant une masse de métal 18, ici approximativement cylindrique et en déformant cette masse de métal à l'aide du poinçon 12 venant s'engager dans l'enclume. Comme mentionné précédemment, l'enclume et le poinçon peuvent être respectivement solidaires des plateaux d'une presse (non représentée). Le forgeage peut être obtenu par martelage en utilisant un marteau pilon portant ledit poinçon. Le même procédé peut s'appliquer avec d'autres métaux, en particulier plus maléables. L'invention n'est en effet pas limitée au forgeage d'une telle pièce en acier. Le procédé pourra se révéler rentable même pour l'obtention de pièces en alliage léger. La surface latérale extérieure 20 du poinçon est globalement cylindrique à l'exception de deux évidements latéraux 22 qui seront décrits plus loin. En fait, pour les besoins du forgeage, cette surface latérale 20 est légèrement tronconique de même que la paroi latérale interne 14 de l'enclume.

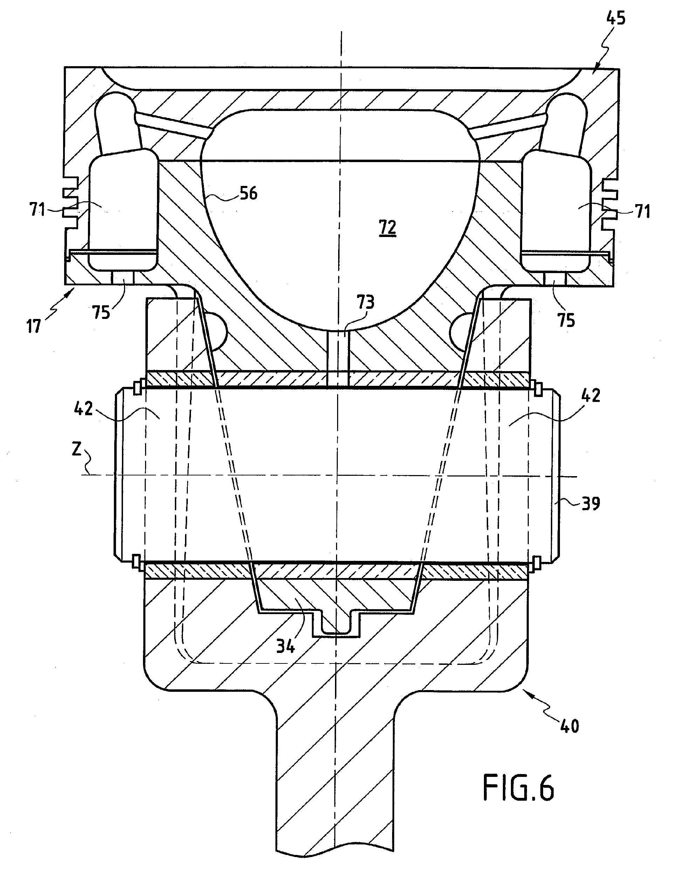

Le poinçon comporte une cavité ouverte 24 débouchant sur sa face d'extrémité 25 qui s'engage dans l'enclume 13. Cette cavité a une forme et des dimensions propres à définir un bossage 28 faisant saillie au centre d'un socle 30 à contour circulaire qui est formé au fond de l'enclume entre la paroi de fond 16 de celle-ci et ladite paroi d'extrémité 25 du poinçon. La cavité du poinçon comporte deux faces 32 sensiblement planes faisant un angle entre elles en sorte que le bossage 28 qui en résulte s'élargisse vers le socle 30 formé au fond de l'enclume. Autrement dit, en raison de la forme de la cavité, le bossage comportera aussi deux faces sensiblement planes 33, faisant un angle entre elles. Comme mentionné précédemment, cette forme du bossage est avantageuse à la fois pour le forgeage et pour réduire l'usinage qui donnera sa forme définitive au pilier central 34. Le bossage est en effet destiné à être repris en usinage pour comporter un alésage 36 (voir figure 3) apte à recevoir un axe d'articulation 39 d'une bielle. Cette bielle 40 représentée notamment à la figure 6 est dotée d'une extrémité comportant deux branches 42 formant une fourche, venant se placer de part et d'autre du pilier central 34 issu dudit bossage.

En d'autres termes, le procédé de fabrication du piston est caractérisé en ce qu'il comporte une étape de forgeage aboutissant à conformer une ébauche 15 (figure 2) d'au moins une partie de ce piston (en l'occurrence ici la partie inférieure comprenant la jupe de coulissement et les moyens de raccordement de la bielle). Le forgeage permet de creuser une masse métallique 18 dans une zone essentiellement annulaire de celle-ci pour laisser subsister le bossage 28 faisant saillie au centre du socle 30 à contour circulaire, lequel est formé au fond de l'enclume 13. L'ébauche est donc forgée à partir de son extrémité inférieure puisque le socle 30 est la partie qui est destinée à recevoir une tête de piston 45. Cette dernière est fabriquée selon un processus classique qui ne fait pas partie de l'invention. On peut cependant envisager de forger une ébauche correspondant à la totalité du piston.

En outre, le forgeage provoque la formation de deux portions de jupe 48 à surface extérieure sensiblement cylindrique (en pratique avec une légère dépouille nécessaire au forgeage) disposées en vis-à-vis et symétriquement de part et d'autre d'une direction d'axe d'articulation. On appelle "direction d'axe d'articulation" la direction de l'axe z du futur alésage qui recevra l'axe d'articulation 39 de la bielle. Pour ce faire, on voit que le poinçon comporte deux évidements latéraux 22 opposés creusés à sa surface latérale externe, propres à définir lesdites deux portions de jupe de piston, en vis-à-vis.

De même, il est avantageux de laisser subsister un voile 50 entre le bossage et la paroi intérieure de chaque portion de jupe pour favoriser la formation de ces portions de jupe au forgeage. Pour cela, une fente 52 s'étend entre chaque évidement 22 et ladite cavité 24 du poinçon destinée à former le bossage.

Dans l'exemple, on laisse aussi subsister une colonnette 54 entre le bossage 28 et la paroi intérieure de chaque portion de jupe précitée. Pour ce faire, la paroi interne de ladite cavité comporte des empreintes 56 de telles colonnettes, lesquelles seront ainsi formées en relief le long du bossage. Comme on peut le voir dans l'exemple de réalisation décrit, les voiles 50 et les colonnettes 54 se confondent. Les colonnettes seront percées ultérieurement pour recevoir des tirants de fixation permettant l'assemblage entre la tête de piston 45 et la pièce 17 issue du forgeage.

De même, on met à profit le forgeage pour former ou au moins amorcer une cavité 56 de l'autre côté du socle 30 par rapport au bossage. Plus particulièrement, le fond 16 de ladite enclume creuse comporte une proéminence 58 propre à former cette cavité ouverte qui sera appelée à constituer une partie d'une chambre de refroidissement. Cette proéminence s'étend en fait à partir du fond d'un évidement cylindrique 60 défini au centre de la paroi de fond 16 de l'enclume. En conséquence, l'ébauche qui résulte du forgeage comporte un socle à contour circulaire présentant deux parties d'épaisseurs différentes (figure 2), une partie périphérique annulaire 61 d'épaisseur relativement faible et une partie centrale 62 de plus grande épaisseur abritant la cavité 56.

Comme cela est visible sur la figure 2, la voute du bossage 28 est arrondie. Autrement dit, le fond de la cavité ouverte 24 du poinçon est lui-même arrondi.

A ce stade de la description du forgeage on comprend à quel point celui-ci est facilité par le fait que la partie centrale de la masse métallique 18 est peu déplacée au cours du forgeage. Le métal est repoussé essentiellement dans une zone annulaire de la masse métallique, tout autour du bossage en cours de conformation, ce qui se traduit essentiellement par la conformation du socle 30 et la remontée du métal entre la paroi intérieure 14 de la matrice et les deux évidements latéraux 22 donnant naissance aux deux portions de jupe de piston 48 en vis-à-vis. En revanche, entre ces deux portions de jupe l'ébauche est totalement ouverte comme cela est bien visible sur la figure 2 puisqu'aucun espace n'est laissé entre la surface latérale (non compris les évidements 22) du poinçon et la surface latérale intérieure de la matrice.

Les figures 3 à 6 montrent la pièce 17 issue des tranformations de l'ébauche de la figure 2 après quelques reprises en usinage. Celles-ci sont peu nombreuses. On reprend les surfaces extérieures des deux portions de jupe 48 de façon à les rendre parfaitement cylindriques, on perce les colonnettes 54 et on aménage l'alésage 36 destiné à recevoir l'axe d'articulation 39 et son coussinet 39a, comme cela est représenté sur la figure 6. Ceci permet le montage de la bielle 40 dont l'extrémité comporte deux branches formant une fourche venant pivoter en regard de deux faces planes du pilier central 34 issu du bossage. On usine aussi la face d'appui de la tête de piston.

D'autre part, on pratique une gorge 70 dans la partie la moins épaisse du socle qui définit avec la tête de piston une cavité annulaire 71 de refroidissement communiquant avec une chambre de refroidissement centrale 72. La gorge 70 peut avantageusement être obtenue au forgeage. L'entrée d'huile se fait par des perçages (non représentés) dans la bielle et l'axe pour alimenter la cavité 72 au travers d'un perçage 73, ce qui lubrifie l'articulation du pied de bielle au passage. La cavité 56 forme une partie de la chambre 52. La sortie d'huile se fait par la cavité 71 et des perçages 75 ménagés au travers du socle. Cet agencement est classique. La pièce usinée résultant de l'ébauche est assemblée par deux tirants à la tête de piston.

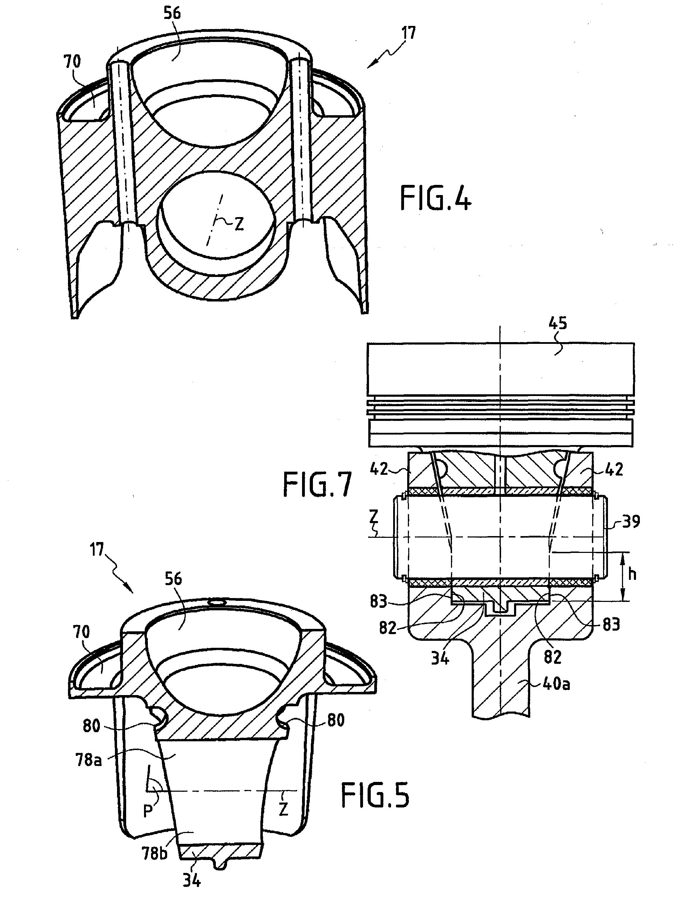

Comme on le voit sur la figure 5, en raison de la forme particulière du pilier central 34 obtenu par usinage du bossage, il apparaît que la surface cylindrique 78a de la partie de l'alésage qui est contenu entre un plan longitudinal médian P de celui-ci perpendiculaire à l'axe du piston et la tête du piston (non représentée à la figure 5) est plus grande que la surface cylindrique 78b de l'autre partie d'alésage. Par conséquent, toutes choses égales par ailleurs, le pilier sera mieux en mesure de contenir les sollicitations provenant de l'axe d'articulation 39 de la bielle à chaque cycle du piston. Des découpes 80 sont avantageusement pratiquées dans le pilier central, du côté du socle pour assouplir l'alésage aux extrémités et lui donner une meilleure conformabilité aux déformations de l'axe.

Dans l'exemple décrit en référence aux figures 1 à 6, le profil trapézoïdal du pilier central et des faces en regard de l'extrémité de la bielle impose de réaliser le guidage latéral de celle-ci au niveau du vilebrequin, ce qui implique d'usiner des joues de guidage sur les bras du vilebrequin. On peut préférer l'agencement de la figure 7 qui permet un guidage de la bielle 40a par le piston lui-même. Pour ce faire, la partie terminale du pilier central 34 fait l'objet d'un usinage particulier en ce sens que les faces inclinées dudit pilier central sont rectifiées sur une hauteur h en partant de l'extrémité dudit pilier central pour définir deux surfaces parallèles 82 de guidage de la bielle, les deux branches de celle-ci étant également conformées avec deux faces planes parallèles 83 correspondantes. Dans ce cas, il n'est plus nécessaire de réaliser un guidage latéral de la bielle par des joues rectifiées sur les bras du vilebrequin.

## Revendications

1. Procédé de fabrication d'un piston, **caractérisé en ce qu'**il comporte une étape de forgeage (11) d'une ébauche (15) d'au moins une partie dudit piston, propre à repousser une masse métallique (18) dans une zone annulaire de celle-ci tout en formant un bossage (28) faisant saillie au centre d'un socle à contour circulaire, ledit bossage étant conformé et dimensionné pour être percé d'un alésage (36) destiné à recevoir un axe d'articulation d'une bielle.

2. Procédé selon la revendication 1, **caractérisé en ce que** ledit forgeage provoque aussi la formation de deux portions de jupe (48) à surface extérieure sensiblement cylindrique, disposées en vis-à-vis et symétriquement de part et d'autre d'une direction d'axe d'articulation.

3. Procédé selon la revendication 1 ou 2, **caractérisé en ce qu'**on conforme ledit bossage avec deux faces sensiblement planes (33) et faisant un angle entre elles en sorte que ledit bossage s'élargisse vers ledit socle.

4. Procédé selon la revendication 2 ou 3, **caractérisé en ce qu'**on laisse subsister un voile (50) entre ledit bossage et la paroi intérieure de chaque portion de jupe précitée.

5. Procédé selon l'une des revendications 2 à 4, **caractérisé en ce qu'**on laisse subsister une colonnette (54) entre ledit bossage et la paroi intérieure de chaque portion de jupe précitée.

6. Procédé selon l'une des revendications précédentes, **caractérisé en ce qu'**on met à profit ledit forgeage pour former une cavité (56) de l'autre côté dudit socle par rapport audit bossage.

7. Procédé selon l'une des revendications précédentes, **caractérisé en ce qu'**on forme ladite ébauche dans une masse d'acier.

8. Outillage de forgeage d'une ébauche d'au moins une partie de piston, **caractérisé en ce qu'**il comporte une enclume creuse (13) à paroi latérale interne sensiblement cylindrique et un poinçon (12) comportant une cavité (24) ouverte débouchant sur sa face d'extrémité, ladite cavité ayant une forme et des dimensions propres à définir un bossage (28) faisant saillie au centre d'un socle (30) à contour circulaire formé au fond de ladite enclume creuse, ledit bossage étant destiné à être repris en usinage pour comporter un alésage (36) apte à recevoir un axe d'articulation d'une bielle.

9. Outillage selon la revendication 8, **caractérisé en ce que** ledit poinçon comporte deux évidements latéraux (22) opposés, propres à définir deux portions de jupe de piston, en vis-à-vis, s'étendant de part et d'autre d'une direction d'axe d'articulation.

10. Outillage selon la revendication 8 ou 9, **caractérisé en ce qu'**une fente (52) s'étend entre chaque évidement latéral et ladite cavité pour définir deux voiles s'étendant chacun entre une portion de jupe et ledit bossage.

11. Outillage selon l'une des revendications 8 à 10, **caractérisé en ce que** la paroi interne de ladite cavité comporte des empreintes de colonnette (56).

12. Outillage selon l'une des revendications 8 à 11, **caractérisé en ce que** ladite cavité comporte deux faces sensiblement planes (32) faisant un angle entre elles en sorte que ledit bossage qui en résulte s'élargisse vers ledit socle.

13. Outillage selon l'une des revendications 8 à 12, **caractérisé en ce que** le fond de ladite enclume creuse comporte une proéminence (58) propre à former une cavité ouverte de l'autre côté dudit socle par rapport audit bossage de ladite ébauche.

14. Piston **caractérisé en ce qu'**il comporte au moins une partie formant jupe de coulissement obtenu par la mise en oeuvre du procédé selon l'une des revendications 1 à 7 et comportant un pilier central (34) obtenu par usinage d'un bossage venu de forgeage, ledit pilier comportant un alésage destiné à recevoir un axe d'articulation d'une bielle.

15. Piston selon la revendication 14, **caractérisé en ce que** la surface cylindrique (78a) de la partie de l'alésage contenue entre un plan longitudinal médian de celui-ci perpendiculaire à l'axe dudit piston et la tête de piston est plus grande que la surface cylindrique (78b) de l'autre partie d'alésage.
